# EUROPEAN PATENT APPLICATION

(11) **EP 4 811 610 A1**
(43) Date of publication of application: **23.09.2026**
(21) Application number: 24947307.5
(22) Date of filing: 08.07.2024
(51) Int. Cl.: H02K 1/276, H02K 21/16, H02K 7/075, F04C 18/344

(54) **MAGNET-EMBEDDED MOTOR AND ROTARY COMPRESSOR HAVING SAME**

(71) Applicant: LG Electronics Inc., Yeongdeungpo-gu Seoul 07336 (KR)
(72) Inventor: CHOI, Hyeonnyeong, Seoul 08592 (KR); JANG, Daekyu, Seoul 08592 (KR); REU, Jinwook, Seoul 08592 (KR); HA, Kyungho, Seoul 08592 (KR); LEE, Injae, Seoul 08592 (KR)
(74) Representative: Vossius & Partner Patentanwälte Rechtsanwälte mbB
(86) International application number: PCT/KR2024/009706
(87) International publication number: WO 2026/014562

(57) **Abstract**

The present invention provides a magnet insertion motor and a rotary compressor having same. The magnet insertion motor comprises: a stator core; a rotor core; a permanent magnet accommodated inside the rotor core; and a rotation shaft provided inside the rotor core and rotating together with the rotor core, wherein the rotation shaft includes an upper portion and a lower portion, a plurality of magnet accommodating portions are provided inside the rotor core, the permanent magnet is inserted into the magnet accommodating portion, the permanent magnet includes a top end, a bottom end, and side ends, the top end includes a rounded portion formed to be rounded, and the bottom end and the two side ends are formed as straight lines.

## Description

### Technical Field

The present disclosure relates to a magnet insertion motor and a rotary compressor having the same, and more particularly, to a magnet insertion motor that reduces noise and vibration and a rotary compressor having the same.

### Background Art

In general, a motor transmits a rotational force of a rotor to a rotation shaft, which then drives a load. For example, the rotation shaft can be connected to a drum of a washing machine to drive the drum, or can be connected to a fan of a refrigerator to drive the fan to supply cold air to the required space.

In such a motor, the rotor rotates by electromagnetic interaction with a stator. To this end, a coil is wound around the stator, and the rotor rotates with respect to the stator as a current is applied to the coil.

A compressor may be divided into a reciprocating compressor, a rotary compressor, and a scroll compressor according to a method of compressing refrigerant. A reciprocating compressor compresses a fluid by arranging a compression space between a piston and a cylinder and causing a piston to reciprocate in a straight line, a rotary compressor compresses a fluid by a roller that rotates eccentrically inside a cylinder, and a scroll compressor compresses a fluid by interlocking and rotating a pair of spiral scrolls.

Among them, the rotary compressor can be divided according to the way the roller rotates with respect to the cylinder. For example, the rotary compressor can be divided into an eccentric rotary compressor in which the roller rotates eccentrically with respect to the cylinder, and a concentric rotary compressor in which the roller rotates concentrically with respect to the cylinder.

Patent Document 1 (Japanese Application No. 2014-110660, June 12, 2014) discloses a magnet insertion motor in which a stator is configured in multiple stages and an inner diameter of the stator increases toward an upper side portion thereof to have a larger air gap, and through this, the problem of torque reduction due to the concentration of magnetic flux on a side of a rotor in the related patents can be improved, and vibration noise due to the shaking of the rotor can be suppressed.

As in Patent Document 1, when the motor stator is manufactured by dividing it into multiple stages, a number of stator cores and a number of molds to be manufactured increase, the manufacturing cost increases due to an increase in punching and assembly time during production, and an average air gap between the stator and the rotor increases in a stacking length direction, thereby deteriorating the motor performance.

A rotary compressor has a shaft supported on one side, and an opposite side of a support portion is spaced from the rotation shaft to move eccentrically.

In an electric motor of the rotary compressor, eccentric rotation between the rotor and shaft causes the shaking of an upper rotor and causes noise and vibration.

In order to solve the problems of the prior art, it has been proposed to have an outer diameter of the rotor or an inner diameter of the stator in a dual manner, but the production process is complicated, thereby resulting in lower productivity and lower motor efficiency due to an increase in average air gap.

It is required to develop an electric motor having a structure that minimizes eccentric rotation between the rotor and shaft and the shaking of an upper rotor, which are causes of noise and vibration.

In addition, the development of an electric motor that maintains high productivity and minimizes a reduction in motor efficiency is required.

### Disclosure of Invention

### Technical Problem

The present disclosure is contrived to solve the foregoing problems, and a first aspect of the present disclosure is to provide a magnet insertion motor having a structure that minimizes eccentric rotation between the rotor and shaft and the shaking of an upper rotor, which are causes of noise and vibration.

A second aspect of the present disclosure is to provide a magnet insertion motor having a magnet shape and arrangement to maintain high productivity and minimize a reduction in motor efficiency.

A third aspect of the present disclosure is to provide a magnet insertion motor in which a magnetic pull force (MPF) is reduced on an upper side of a stator facing a magnet, thereby reducing the shaking of the rotor and reducing vibration and noise.

A fourth aspect of the present disclosure is to provide a magnet insertion motor capable of having high productivity, reducing material costs, and having an optimized shaped magnet due to a simple production process compared to stacking of core shapes in a dual manner.

### Solution to Problem

In order to solve the foregoing problems, a magnet insertion motor of the present disclosure can include a stator core, a rotor core provided on an inner side of the stator core and provided to be rotatable, a permanent magnet accommodated inside the rotor core, a rotation shaft provided on an inner side of the rotor core to rotate together with the rotor core, wherein the rotation shaft includes an upper side portion coupled to the rotor core and a lower side portion coupled to a load that receives a rotational force of the rotor core, a plurality of magnet receiving portions spaced apart along a circumferential direction are provided inside the rotor core, the permanent magnet is inserted into the magnet receiving portion, the permanent magnet includes an upper end facing an end portion of the upper side portion of the rotation shaft based on a surface where the polarity acts, a lower end opposite to the upper end to face an end portion of the lower side portion of the rotation shaft, and two side surface ends connecting the upper end and the lower end, the upper end includes a rounded portion arranged to be rounded, and the lower end and the two side surface ends are arranged in a straight line.

Due to this, an upper side of the stator core facing an upper side of the magnet can have a reduced magnetic pull force (MPF) so as to reduce the shaking of the rotor core and reduce vibration and noise. In addition, upper and lower portions thereof can arrange an asymmetrical structure, the upper side of the stator core facing the upper side of the magnet can have a reduced magnetic pull force (MPF) so as to reduce the shaking of the rotor core and reduce vibration and noise.

Each of the plurality of magnet receiving portions can be configured with a pair of magnet receiving portions inserted in a V-shape so as to be spaced apart from each other as going outward in a radial direction, wherein the pair of magnet receiving portions includes a first magnet receiving portion and a second magnet receiving portion, and the permanent magnet includes a first permanent magnet inserted into the first magnet receiving portion and a second permanent magnet inserted into the second magnet receiving portion.

Preferably, the lower side portion of the rotation shaft can include a crankshaft that rotates eccentrically.

Due to this, it can be possible to reduce cogging torque while minimizing a decrease in motor efficiency. In addition, an amount of magnet used can be decreased to reduce material costs and a usage rate of the magnet can be increased with an optimized shape. In addition, it can be possible to reduce cogging torque while minimizing a decrease in motor efficiency.

The first and second permanent magnets can have rounded portions, at respective upper ends, on respective one sides thereof adjacent to each other.

According to this configuration, an amount of magnet used can be decreased to reduce material costs and a usage rate of the magnet can be increased with an optimized shape. In addition, a magnetic pull force can be reduced while minimizing a reduction in motor efficiency.

The first permanent magnet can have a rounded portion, at an end, on one side thereof adjacent to the second permanent magnet, and the second permanent magnet can have a rounded portion, at an end, in a portion provided between one side adjacent to the first permanent magnet and the other side opposite thereto.

Due to this, a magnetic pull force can be reduced while minimizing a reduction in motor efficiency.

The first permanent magnet can have a rounded portion, at an end, on one side thereof adjacent to the second permanent magnet, and the second permanent magnet can have a rounded portion, at an end, on the other side provided opposite to one side thereof adjacent to the first permanent magnet.

Due to this, an upper side of the stator core facing an upper side of the magnet can have a reduced magnetic pull force (MPF) so as to reduce the shaking of the rotor core and reduce vibration and noise.

The first permanent magnet can have a rounded portion, at an end, in a portion provided between one side thereof adjacent to the second permanent magnet and the other side opposite thereto, and the second permanent magnet can have a rounded portion, at an end, on one side thereof adjacent to the first permanent magnet.

The first permanent magnet can have a rounded portion in the middle portion on one end, and the second permanent magnet can have a rounded portion on one side adjacent to the first permanent magnet, thereby reducing cogging torque while minimizing a decrease in motor efficiency.

The first permanent magnet can have a rounded portion, at an end, in a portion provided between one side thereof adjacent to the second permanent magnet and the other side opposite thereto, and the second permanent magnet can have a rounded portion, at an end, in a portion provided between one side adjacent to the first permanent magnet and the other side opposite thereto.

Due to this, it can be possible to reduce cogging torque while minimizing a decrease in motor efficiency.

The first permanent magnet can have a rounded portion, at an end, in a portion provided between one side thereof adjacent to the second permanent magnet and the other side opposite thereto, and the second permanent magnet can have a rounded portion, at an end, on the other side provided opposite to one side thereof adjacent to the first permanent magnet.

Due to this, an amount of magnet used can be decreased to reduce material costs and a usage rate of the magnet can be increased with an optimized shape. In addition, it can be possible to reduce cogging torque while minimizing a decrease in motor efficiency.

Preferably, the first and second magnet receiving portions can alternately be provided in a circumferential direction on an outer side of the rotor core.

The rounded portions of the first and second permanent magnets can include curved portions on one side and the other side, respectively.

Corner removal areas can be provided between both sides of the rounded portion, the first and second magnet receiving portions, and side walls of the first and second magnet receiving portions.

Due to this, an amount of magnet used can be decreased to reduce material costs and a usage rate of the magnet can be increased with an optimized shape. In addition, it can be possible to reduce cogging torque while minimizing a decrease in motor efficiency.

The stator core can have teeth that extend radially to arrange an air gap with an outer circumference of the rotor core, and the corner removal areas can overlap the teeth in a circumferential direction.

According to this configuration, an upper side of the stator core facing an upper side of the magnet can have a reduced magnetic pull force so as to reduce the shaking of the rotor core and reduce vibration and noise.

A protruding bridge arranged to protrude from a surface between the first magnet receiving portion and the second magnet receiving portion can be provided to define one side of the corner removal area between the first magnet receiving portion and the second magnet receiving portion.

The protruding bridge can have a predetermined width and extend in an axial direction to support side surfaces of the first and second permanent magnets.

The first and second permanent magnets can have a curvature on one sides of the rounded portions adjacent to each other that is smaller than that on the other sides of the rounded portions opposite thereto.

The first permanent magnet can have a curvature on one side of the rounded portion adjacent to the second permanent magnet that is smaller than that on the other side opposite thereto, and the second permanent magnet can have the same curvature on one side of the rounded portion adjacent to the first permanent magnet and on the other side opposite thereto.

The first permanent magnet can have a curvature on one side of the rounded portion adjacent to the second permanent magnet that is smaller than that on the other side opposite thereto, and the second permanent magnet can have a curvature on one side of the rounded portion adjacent to the first permanent magnet that is larger than that on the other side opposite thereto.

The first permanent magnet can have the same curvature on one side of the rounded portion adjacent to the second permanent magnet and on the other side opposite thereto, and the second permanent magnet can have a curvature on one side of the rounded portion adjacent to the first permanent magnet that is smaller that on the other side opposite thereto.

A rotary compressor of the present disclosure can include a casing constituting an exterior thereof, a cylinder provided inside the casing to have a compression space on an inner circumferential surface thereof, and a suction port communicating with the compression space to allow the suction of refrigerant, a roller that is rotatably provided in the compression space of the cylinder, and the magnet insertion motor.

### Advantageous Effects of Invention

In a magnet insertion motor of the present disclosure, first and second permanent magnets can each include a rounded portion arranged to be rounded at one end, so as to allow an upper side of a stator core facing an upper side of the permanent magnet to have a reduced magnetic pull force, thereby reducing the shaking of a rotor core, and reducing vibration and noise.

Furthermore, in the magnet insertion motor of the present disclosure, a shape of the rotor core is not stacked in a dual manner, thereby having a simple production process and high productivity.

In addition, in the magnet insertion motor of the present disclosure, an amount of magnet used can be decreased to reduce material costs and a usage rate of the magnet can be increased with an optimized shape.

### Brief Description of Drawings

FIG. 1 is a cross-sectional view showing a rotary compressor of the present disclosure.
FIG. 2 is a perspective view of a magnet insertion motor of the present disclosure viewed from one side.
FIG. 3 is a plan view showing a portion of the magnet insertion motor of the present disclosure.
FIG. 4 is a front view showing an example of a permanent magnet of the present disclosure.
FIG. 5 is a front view showing another example of a permanent magnet of the present disclosure.
FIG. 6 is a front view showing still another example of a permanent magnet of the present disclosure.
FIG. 7 is a plan view showing an arrangement of first and second permanent magnets in Case 2.
FIG. 8 is a plan view showing an arrangement of first and second permanent magnets in Case 3.
FIG. 9 is a plan view showing an arrangement of first and second permanent magnets in Case 4.
FIG. 10 is a plan view showing an arrangement of first and second permanent magnets in Case 5.
FIG. 11 is a plan view showing an arrangement of first and second permanent magnets in Case 6.
FIG. 12 is a plan view showing an arrangement of first and second permanent magnets in Case 7.
FIG. 13 is a plan view showing an arrangement of first and second permanent magnets in Case 8.
FIG. 14 is a plan view showing an arrangement of first and second permanent magnets in Case 9.
FIG. 15 is a graph showing a magnetic pull force (MPF) and motor efficiency for each case.
FIG. 16 is a graph showing cogging torque and motor efficiency for each case.

### Mode for the Invention

Hereinafter, a magnet insertion motor according to the present disclosure and a rotary compressor having the same will be described in detail based on an embodiment shown in the accompanying drawings. In the following description, descriptions of some elements will be omitted to clarify the features of the present disclosure.

In addition, the term "upper side" used in the following description refers to a direction away from a support surface that supports a magnet insertion motor and a rotary compressor according to an embodiment of the present disclosure, that is, an upper side toward a compression part when viewed from the center of an electric motor part 120 and the compression part. The term "lower side" refers to a direction closer to the support surface, that is, a lower side toward the electric motor part 120 when viewed from the center of the electric motor part 120 and the compression part.

In addition, the term "axial direction" used in the following description refers to a longitudinal direction of a rotation shaft 125. The term "axial direction" can be understood as an up-down direction. The term "radial direction" refers to a direction intersecting the rotation shaft 125.

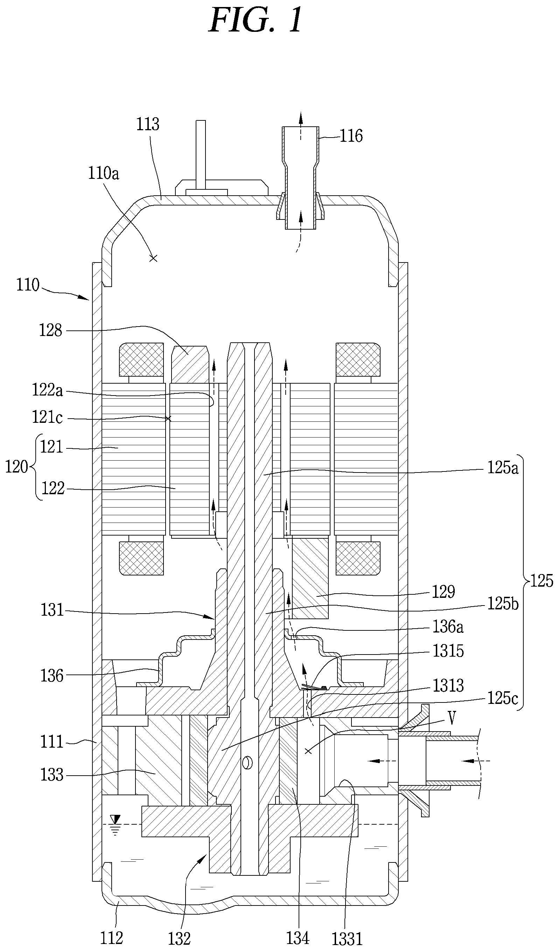

FIG. 1 shows an example of a rotary compressor.

Referring to FIG. 1, a rotary compressor can include a casing 110 constituting an exterior thereof, a cylinder 133 provided inside the casing 110 to have a compression space V on an inner circumferential surface thereof, and a suction port communicating with the compression space V to allow the suction of refrigerant, a roller 134 that is rotatably provided in the compression space of the cylinder 133, and a magnet insertion motor 120, which will be described later.

A magnet insertion motor can include, for example, a stator 121 coupled to an inner circumference of the casing 110 and a rotor 122 rotatably provided on an inner circumference of the stator 121 to have a rotation shaft 125 provided on the inner surface.

The casing 110, which is a portion constituting an exterior of the compressor, can be divided into a vertical or horizontal type according to an installation mode of the compressor. The vertical type is a structure in which a magnet insertion motor 120 and a compression part 130 are arranged on both upper and lower sides along an axial direction, and the horizontal type is a structure in which the magnet insertion motor 120 and the compression part 130 are arranged on both left and right sides. Although the casing 110 according to this embodiment is described based on the vertical type, it is not excluded that the casing 110 is also applied to the horizontal type.

The casing 110 may include an intermediate shell 111 arranged in a cylindrical shape, a lower shell 112 covering a lower end of the intermediate shell 111, and an upper shell 113 covering an upper end of the intermediate shell 111.

The cylinder 133 has an inner circumferential surface arranged in an annular shape to form a compression space V. In addition, the cylinder 133 has a suction port 1331, which is arranged to communicate with the compression space V so as to suck refrigerant and provide it to the compression space V.

The inner circumferential surface of the cylinder 133 can be arranged in an elliptical shape. For example, the inner circumferential surface of the cylinder 133 can be arranged in an asymmetrical elliptical shape by combining a plurality of ellipses.

The roller 134 is rotatably provided in the compression space V of the cylinder 133. In addition, the roller 134 has a plurality of vane slots (not shown) arranged at preset intervals along an outer circumferential surface thereof. In addition, the compression space V is arranged between an inner circumference of the cylinder 133 and an outer circumference of the roller 134.

A lower side portion 125b of the rotation shaft 125 can include a crank shaft 125c that rotates eccentrically. The crankshaft 125c can be a portion inserted into an inner circumference of the roller 134.

That is, the compression space V is a space arranged between an inner circumferential surface of the cylinder 133 and an outer circumferential surface of the roller 134. In addition, the compression space V is partitioned into spaces equal to a number of vanes by a plurality of vanes (not shown).

The vane (not shown) is configured to be slidably inserted into the vane slot to rotate together with the roller 134. In addition, a back pressure is provided at a rear end of the vane so as to allow a front end of the vane to come into contact with the inner circumference of the cylinder 133.

The magnet insertion motor 120 can be provided in an upper internal space 110a of the casing 110, the compression part 130 can be provided in a lower internal space 110a of the casing 110, and the magnet insertion motor 120 and the compression part 130 can be connected by the rotation shaft 125.

The magnet insertion motor 120, which is a portion constituting an electric motor part, provides power to drive the compression part 130. The magnet insertion motor 120 includes a stator 121, a rotor 122, and a rotation shaft 125.

The stator 121 can be fixedly provided inside the casing 110, and can be press-fitted and fixed to the inner circumferential surface of the casing 110 by shrink fit, or the like. For example, the stator 121 can be press-fitted and fixed to an inner circumferential surface of the intermediate shell 111. The stator 121 can include a stator core 121a, which will be described later. A coil can be wound around the stator core 121a.

The rotor 122 is rotatably inserted into the stator 121, and the rotation shaft 125 is press-fitted and coupled to the center of the rotor 122. Accordingly, the rotation shaft 125 rotates together with the rotor 122. The rotor 122 can include a rotor core 122a, which will be described later.

As described below, the rotation shaft 125 includes an upper side portion 125a coupled to a rotor core 122a and a lower side portion 125b coupled to a load that receives a rotational force of the rotor core 122a.

The upper side portion 125a can be a rotor or rotor core side portion. The lower side portion 125b can be a portion to which a load or compression part is coupled.

In the present disclosure, as the compression part moves eccentrically, a load side (lower side portion) of the rotor can have greater shaking than the upper side portion.

When an external power source is applied to a coil of the stator core 121a, a magnetic field can be formed around the coil of the stator. The rotor 122 and the rotation shaft 125 coupled thereto can rotate by an electromagnetic interaction with the stator 121.

The rotor 122 can include a vent hole 122a arranged to pass through upper and lower sides thereof. A stream of refrigerant discharged from the compression part can flow upward through the vent hole 122a.

An oil passage can be arranged in a shape of a hollow hole at the center of the rotation shaft 125.

An oil pickup (not shown) can be provided in the middle or lower end of the oil passage so as to allow oil from an oil storage space to be sucked up and supplied to a sliding portion.

In addition, the rotation shaft 125 can be arranged integrally with the roller 134 or post-assembled by press-fitting the roller 134.

The rotary compressor of the present disclosure can further include a main bearing 131 and a sub-bearing 132. The main bearing 131 and sub-bearing 132 can be respectively provided at both ends of the cylinder 133. The main bearing 131 and the sub-bearing 132 are arranged so as to be spaced apart from each other so as to form two sides of the aforementioned compression space V.

In the present disclosure, the rotation shaft 125 of the magnet insertion motor in the rotary compressor is assembled in a structure of being supported on one side at a lower end of the mechanism thereby allowing an opposite side of a support portion on one side of the rotation shaft 125 to be spaced apart from the rotation shaft 125 so as to rotate eccentrically during the operation of the rotary compressor. In this case, due to the eccentricity of the rotation shaft 125 that occurs, an air gap 121c in the upper side portion between the stator and the rotor in the motor becomes uneven, and a magnetic pull force is generated in a direction in which the eccentricity of the rotation shaft 125 increases so as to cause a problem of increasing the vibration and noise of the compressor.

The present disclosure proposes a magnet structure and arrangement having asymmetrical shapes at upper and lower portions that can improve eccentric rotation characteristics generated from a one-sided support structure of the rotation shaft 125 so as to reduce vibration and noise of the rotary compressor.

The magnet insertion motor of the present disclosure includes a stator core 121a, a rotor core 122a provided on an inner side of the stator core 121a and provided to be rotatable, a permanent magnet 123, 124 accommodated inside the rotor core 122a, and a rotation shaft 125 having one side provided on an inner side of the rotor core 122a to rotate together with the rotor core 122a.

The rotation shaft 125 includes an upper side portion 125a coupled to a rotor core 122a and a lower side portion 125b coupled to a load that receives a rotational force of the rotor core 122a.

A plurality of magnet receiving portions 122b, 122c spaced apart along a circumferential direction are provided on an inner side of the rotor core 122a.

The permanent magnet 123, 124 is inserted into the magnet receiving portion 122b, 122c.

The permanent magnet 123, 124 includes an upper end facing an end portion of the upper side portion 125a of the rotation shaft 125 based on a surface where the polarity acts, a lower end 123f, 124f opposite to the upper end to face an end portion of the lower side portion 125b of the rotation shaft 125, and two side surface ends 123k, 124k connecting the upper end and the lower end 123f, 124f.

The upper end includes a rounded portion 123a, 124a arranged to be rounded, and the lower end 123f, 124f and two side surface ends 123k, 124k are arranged in a straight line.

For example, the motor of the present disclosure can be a straight-line-shaped IPM type motor.

The present disclosure can minimize eccentric rotation of the rotor and rotation shaft 125, which are causes of noise and vibration, and shaking of the upper rotor core 122a. In particular, the present disclosure can minimize a reduction in motor efficiency while maintaining high productivity.

The present disclosure can include rounded portions 123a, 124a at upper ends of the first and second permanent magnets 123, 124, thereby minimizing shaking at an upper portion of the rotor.

In addition, the present disclosure can reduce noise and vibration sources generated during eccentric operation.

For example, each of the plurality of magnet receiving portions 122b, 122c can be configured with a pair of magnet receiving portions 122b, 122c inserted in a V shape so as to be spaced apart from each other as going outward in a radial direction.

The pair of magnet receiving portions 122b, 122c can include a first magnet receiving portion 122b and a second magnet receiving portion 122c.

The permanent magnets 123, 124 can include a first permanent magnet 123 inserted into the first magnet receiving portion 122b and a second permanent magnet 124 inserted into the second magnet receiving portion 122c.

A lower side portion 125b of the rotation shaft 125 can include a crank shaft 125c that rotates eccentrically.

For example, the motor of the present disclosure can be a V-shaped IPM type motor.

One side of the rotor core 122a can include the first magnet receiving portion 122b and the second magnet receiving portion 122c that are arranged to intersect with each other.

The permanent magnets 123, 124 can include the first permanent magnet 123, 124 accommodated in the first magnet receiving portion 122b and the second permanent magnet 123, 124 accommodated in the second magnet receiving portion 122c.

The first and second permanent magnets 123, 124 can have rounded portions 123a, 124a arranged to be rounded at an upper end.

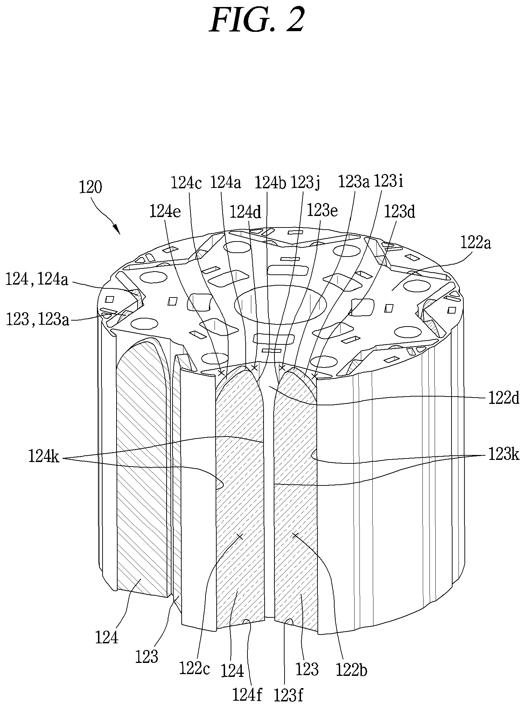

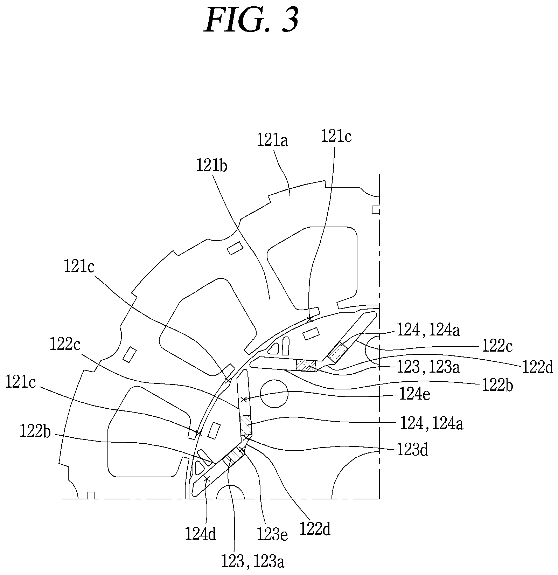

FIG. 2 is a perspective view of a magnet insertion motor of the present disclosure viewed from one side. FIG. 3 is a plan view showing a portion of the magnet insertion motor of the present disclosure.

An example in which the first and second permanent magnets 123, 124 in the present disclosure are provided in the rotor core 122a is shown in FIG. 2.

The first and second permanent magnets 123, 124 are accommodated in the first and second magnet receiving portions 122b, 122c, respectively.

The first magnet receiving portion 122b and the second magnet receiving portion 122c can be arranged to intersect each other while forming a predetermined angle on one side of the rotor core 122a.

A protruding bridge 122d can be provided between the first magnet receiving portion 122b and the second magnet receiving portion 122c. The protruding bridge 122d can be arranged between the first and second permanent magnets 123, 124.

The protruding bridge 122d can be arranged to protrude on a surface between the first magnet receiving portion 122b and the second magnet receiving portion 122c. The protruding bridge 122d can have a predetermined width. The protruding bridge 122d can be arranged to extend in an axial direction, which is a direction in which the rotation shaft 125 extends.

By this structure, the protruding bridge 122d can define one side of a corner removal area.

In addition, the protruding bridge 122d can support the first and second permanent magnets 123, 124 between the first and second permanent magnets 123, 124.

In the present disclosure, for convenience, in order to refer to an arrangement position of the rounded portion 123a, 124a as a left, right, or middle position, the left, right, or middle position is designated when looking at the first and second permanent magnets 123, 124 based on a portion where the rotation shaft 125, which is the center of the rotor core 122a, is provided. That is, the left and right are determined based on when looking outward from an inner side of the rotor core 122a or the center where the rotation shaft 125 is provided.

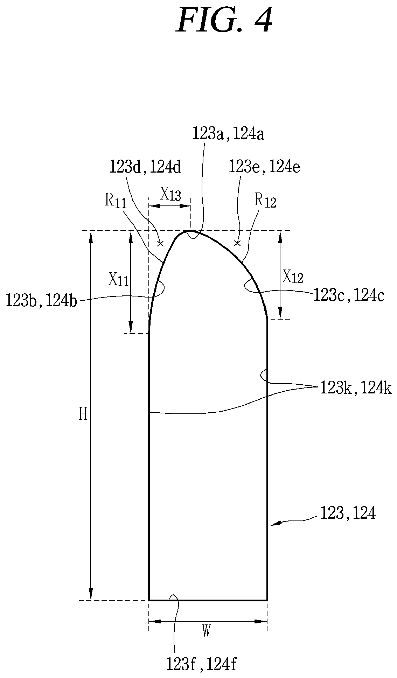

FIG. 4 is a front view showing an example of a permanent magnet 123, 124 of the present disclosure.

Referring to FIG. 4, an example in which the rounded portion 123a, 124a is provided on the left at an upper end of the permanent magnet 123, 124 is shown.

A first curved portion 123b can be provided on one side of the rounded portion 123a, 124a, and a second curved portion 123c can be provided on the other side.

The first curved portion 123b and the second curved portion 123c can be distinguished based on an end portion of the rounded portion 123a.

In FIG. 4, the first curved portion 123b can be provided on a left end of the rounded portion 123a, 124a, and the second curved portion 123c can be provided on a right end thereof. The first curved portion 123b and the second curved portion 123c can respectively have different predetermined curvatures. For example, a curvature of the first curved portion 123b can be smaller than that of the second curved portion 123c. A curvature and a radius of curvature are inversely proportional or reciprocal to each other. That is, a radius of curvature of the first curved portion 123b can be greater than that of the second curved portion 123c.

First and second corner removal areas 123d, 123e can be provided on both sides of the rounded portion 123a, 124a, respectively.

The first and second corner removal areas 123d, 123e can be areas defined by both sides of the rounded portion 123a, 124a, the first and second magnet receiving portions 122b, 122c, and side walls or bridges connected between the first and second magnet receiving portions 122b, 122c, respectively.

For example, the first curved portion 123b can have a first corner removal area 123d, and the second curved portion 123c can have a second corner removal area 123e.

The first and second corner removal areas 123d, 123e are areas where no magnet portion is provided around the rounded portion 123a, 124a of the permanent magnet 123, 124. That is, when the permanent magnet 123, 124 is arranged in a rectangular shape, it is a portion where a corner is arranged, and as the rounded portion 123a, 124a is arranged, it can be understood as a surrounding space.

As the first and second corner removal areas 123d, 123e are provided, a magnetic pull force on an upper side of a portion of teeth 121b on a side of the stator core 121a is reduced, thereby reducing the shaking of the rotor core 122a and reducing vibration and noise.

In addition, an amount of magnet used can be decreased to reduce material costs and a usage rate of the magnet can be increased with an optimized shape.

The permanent magnet 123, 124 can have a width (W) and a height (H).

The width of the permanent magnet 123, 124 can be a distance from a left end portion to a right end portion. In addition, the height of the permanent magnet 123, 124 can be the shortest distance from a lower end thereof to an end portion of the rounded portion 123a, 124a.

For example, the width (W) of the permanent magnet 123, 124 can be greater than or equal to 5 mm and less than or equal to 10 mm.

For example, the height (H) of the permanent magnet 123, 124 can be greater than or equal to 25 mm and less than or equal to 60 mm.

A vertical distance X11 from an upper end of the rounded portion 123a, 124a to a lower end of the first curved portion 123b can be less than half the height (H) of the permanent magnet 123, 124.

For example, the vertical distance X11 from an upper end of the rounded portion 123a, 124a to a lower end of the first curved portion 123b can be greater than or equal to 12.5 mm and less than or equal to 30 mm.

A vertical distance X12 from an upper end of the rounded portion 123a, 124a to a lower end of the second curved portion 123c can be less than half the height (H) of the permanent magnet 123, 124.

For example, the vertical distance X12 from an upper end of the rounded portion 123a, 124a to a lower end of the second curved portion 123c can be greater than or equal to 12.5 mm and less than or equal to 30 mm.

A distance of the first curved portion 123b can be greater than half the width (W) of the permanent magnet 123, 124. The distance of the first curved portion 123b can be a distance on an arc passing between both ends of the first curved portion 123b. For example, the distance of the first curved portion 123b can be greater than or equal to 5 mm.

A distance of the second curved portion 123c can be greater than half the width (W) of the permanent magnet 123, 124. The distance of the second curved portion 123c can be a distance on an arc passing between both ends of the second curved portion 123c. For example, the distance of the second curved portion 123c can be greater than or equal to 5 mm.

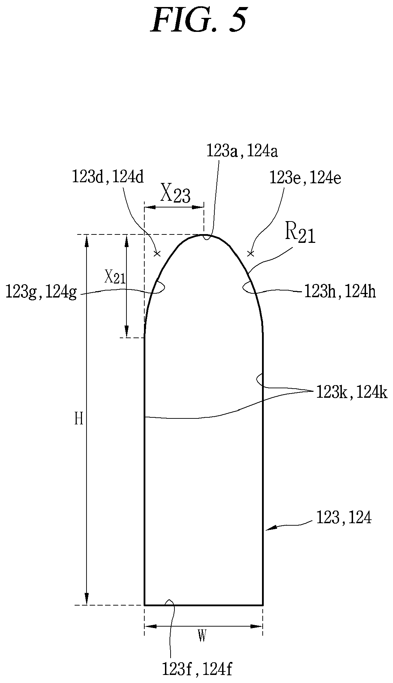

FIG. 5 is a front view showing another example of a permanent magnet of the present disclosure.

Referring to FIG. 5, an example in which the rounded portion 123a, 124a is provided in the middle between the left and right at an upper end of a permanent magnet 123, 124 is shown.

A third curved portion 123g can be provided on one side of the rounded portion 123a, 124a, and a fourth curved portion 123h can be provided on the other side.

In FIG. 5, the third curved portion 123g can be provided on a left end of the rounded portion 123a, 124a, and the fourth curved portion 123h can be provided on a right end thereof. For example, the third curved portion 123g and the fourth curved portion 123h can each have the same predetermined curvature so as to be symmetrical to each other.

The third curved portion 123g can have a third corner removal area 123d, and the fourth curved portion 123h can have a fourth corner removal area 123e.

As the third and fourth corner removal areas 123d, 123e are provided, a magnetic pull force on an upper side of a portion of teeth 121b on a side of the stator core 121a is reduced, thereby reducing the shaking of the rotor core 122a and reducing vibration and noise.

In addition, an amount of magnet used can be decreased to reduce material costs and a usage rate of the magnet can be increased with an optimized shape.

The permanent magnet 123, 124 can have a width (W) and a height (H).

The width of the permanent magnet 123, 124 can be a distance from a left end portion to a right end portion. In addition, the height of the permanent magnet 123, 124 can be the shortest distance from a lower end thereof to an end portion of the rounded portion 123a, 124a.

For example, the width (W) of the permanent magnet 123, 124 can be greater than or equal to 5 mm and less than or equal to 10 mm.

For example, the height (H) of the permanent magnet 123, 124 can be greater than or equal to 25 mm and less than or equal to 60 mm.

A vertical distance X11 from an upper end of the rounded portion 123a, 124a to a lower end of the third curved portion 123g or the fourth curved portion 123h can be less than half the height (H) of the permanent magnet 123, 124.

For example, the vertical distance X11 from an upper end of the rounded portion 123a, 124a to a lower end of the third curved portion 123g or the fourth curved portion 123h can be greater than or equal to 12.5 mm and less than or equal to 30 mm.

A distance of the third curved portion 123g or the fourth curved portion 123h can be greater than half the width (W) of the permanent magnet 123, 124. The distance of the third curved portion 123g or the fourth curved portion 123h can be a distance on an arc passing between both ends of the third curved portion 123g or the fourth curved portion 123h. For example, the distance of the third curved portion 123g or the fourth curved portion 123h can be greater than or equal to 5 mm.

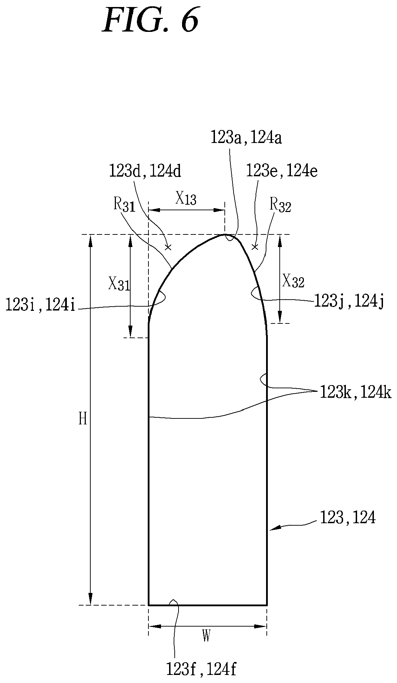

FIG. 6 is a front view showing still another example of a permanent magnet of the present disclosure.

Another example of the first and second permanent magnets 123, 124 in the present disclosure is shown in FIG. 6.

A described above, in the present disclosure, for convenience, in order to refer to an arrangement position of the rounded portion 123a, 124a as a left, right, or middle position, the left, right, or middle position is designated based on a direction of viewing the first and second permanent magnets 123, 124 from a portion where the rotation shaft 125, which is the center of the rotor core 122a, is provided.

Referring to FIG. 6, an example in which the rounded portion 123a, 124a is provided on the right at an upper end of the permanent magnet 123, 124 is shown.

A fifth curved portion 123i can be provided on one side of the rounded portion 123a, 124a, and a sixth curved portion 123j can be provided on the other side.

In FIG. 6, the fifth curved portion 123i can be provided on a left end of the rounded portion 123a, 124a, and the sixth curved portion 123j can be provided on a right end thereof. The fifth curved portion 123i and the sixth curved portion 123j can respectively have different predetermined curvatures. For example, a curvature of the fifth curved portion 123i can be smaller than that of the sixth curved portion 123j. A curvature and a radius of curvature are inversely proportional or reciprocal to each other. That is, a radius of curvature of the fifth curved portion 123i can be smaller than that of the sixth curved portion 123j.

The fifth curved portion 123i can have a fifth corner removal area 123d, and the sixth curved portion 123j can have a sixth corner removal area 123e.

As the fifth and sixth corner removal areas 123d, 123e are provided, a magnetic pull force on an upper side of a portion of teeth 121b on a side of the stator core 121a is reduced, thereby reducing the shaking of the rotor core 122a and reducing vibration and noise.

In addition, an amount of magnet used can be decreased to reduce material costs and a usage rate of the magnet can be increased with an optimized shape.

The permanent magnet 123, 124 can have a width (W) and a height (H).

The width of the permanent magnet 123, 124 can be a distance from a left end portion to a right end portion. In addition, the height of the permanent magnet 123, 124 can be the shortest distance from a lower end thereof to an end portion of the rounded portion 123a, 124a.

For example, the width (W) of the permanent magnet 123, 124 can be greater than or equal to 5 mm and less than or equal to 10 mm.

For example, the height (H) of the permanent magnet 123, 124 can be greater than or equal to 25 mm and less than or equal to 60 mm.

A vertical distance (X31) from an upper end of the rounded portion 123a, 124a to a lower end of the fifth curved portion 123i can be less than half the height (H) of the permanent magnet 123, 124.

For example, the vertical distance (X31) from an upper end of the rounded portion 123a, 124a to a lower end of the fifth curved portion 123i can be greater than or equal to 12.5 mm and less than or equal to 30 mm.

A vertical distance X32 from an upper end of the rounded portion 123a, 124a to a lower end of the sixth curved portion 123j can be less than half the height (H) of the permanent magnet 123, 124.

For example, the vertical distance X32 from an upper end of the rounded portion 123a, 124a to a lower end of the sixth curved portion 123j can be greater than or equal to 12.5 mm and less than or equal to 30 mm.

A distance of the fifth curved portion 123i can be greater than half the width (W) of the permanent magnet 123, 124. The distance of the fifth curved portion 123i can be a distance on an arc passing between both ends of the fifth curved portion 123i. For example, the distance of the fifth curved portion 123i can be greater than or equal to 5 mm.

A distance of the sixth curved portion 123j can be greater than half the width (W) of the permanent magnet 123, 124. The distance of the sixth curved portion 123j can be a distance on an arc passing between both ends of the sixth curved portion 123j. For example, the distance of the sixth curved portion 123j can be greater than or equal to 5 mm.

Hereinafter, an arrangement of permanent magnets 123, 124 to reduce a magnetic pull force (MPF) or cogging torque will be described.

The magnetic pull force (MPF) in the magnet insertion motor is a force allowing the permanent magnets 123, 124 to pull radially on the teeth 121b of the stator core 121a, and when an air gap 121c in an upper portion of the magnet insertion motor becomes smaller as the rotation shaft 125 inside the rotor becomes eccentric to the compression part, vibration and noise increase due to an increase in the magnetic pull force (MPF).

In the present disclosure, in order to reduce the shaking of an upper portion of the rotor core 122a, a shape of the permanent magnets 123, 124 is changed to have the rounded portions 123a, 124a so as to reduce the magnetic pull force (MPF) to reduce the shaking of the rotor core 122a, thereby reducing vibration and noise.

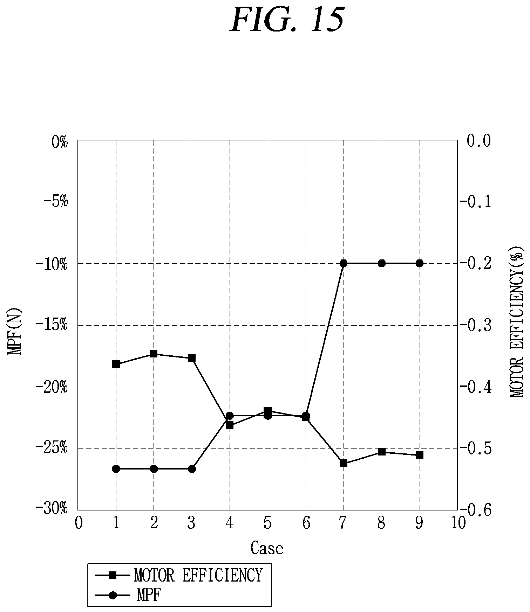

In FIG. 15, magnetic pull force (MPF) characteristics according to an air gap 121c between the rotor core 122a and the stator core 121a are shown in a graph, in which it can be seen that the smaller the air gap 121c, the larger the magnetic pull force (MPF), and conversely, the larger the air gap 121c, the smaller the magnetic pull force (MPF) is inversely proportional.

First, Cases 1 to 3, which are advantageous arrangements for reducing a magnetic pull force, will be described.

In Case 1, the first and second permanent magnets 123, 124 have rounded portions 123a, 124a, at respective upper ends, on respective one sides thereof adjacent to each other.

In Case 1, the rounded portion 123a, 124a of the first permanent magnet 123, 124 and the rounded portion 123a, 124a of the second permanent magnet 123, 124 are arranged as close as possible to each other compared to other cases.

In FIGS. 2 and 3, the first magnet receiving portion 122b and the second magnet receiving portion 122c are arranged to intersect each other on one side of the rotor core 122a. In addition, the first magnet receiving portion 122b and the second magnet receiving portion 122c can be arranged alternately on an outer side of the rotor core 122a as a pair, and the two pairs are arranged in success.

When viewed from a portion where the rotation shaft 125, which is the center of the rotor core 122a, is provided, the first magnet receiving portion 122b is arranged on the left, and the second magnet receiving portion 122c is arranged on the right. The first magnet receiving portion 122b and the second magnet receiving portion 122c are connected so as to intersect each other.

The rounded portion 123a, 124a is arranged on an upper right side of the first permanent magnet 123, 124 accommodated in the first magnet receiving portion 122b, and the rounded portion 123a, 124a is arranged on an upper left side of the second permanent magnet 123, 124 accommodated in the second magnet receiving portion 122c.

As such, the first and second permanent magnets 123, 124 allow the rounded portions 123a, 124a to be arranged, at respective upper ends, on respective one sides thereof adjacent to each other.

As shown in FIGS. 2 and 3, the first and second permanent magnets 123, 124 have a curvature on one sides 124b, 123j of the rounded portion 123a, 124a adjacent to each other that is smaller than that on the other sides 123i, 124c of the rounded portions 123a, 124a opposite thereto.

Due to this, a magnetic pull force can be reduced while minimizing a reduction in motor efficiency.

In Case 2, the first permanent magnet 123, 124 has the rounded portion 123a, 124a, at an upper end, on one side adjacent to the second permanent magnet 123, 124. The second permanent magnet 123, 124 has the rounded portion 123a, 124a, at an upper end, in a portion provided between one side adjacent to the first permanent magnet 123, 124 and the other side opposite thereto.

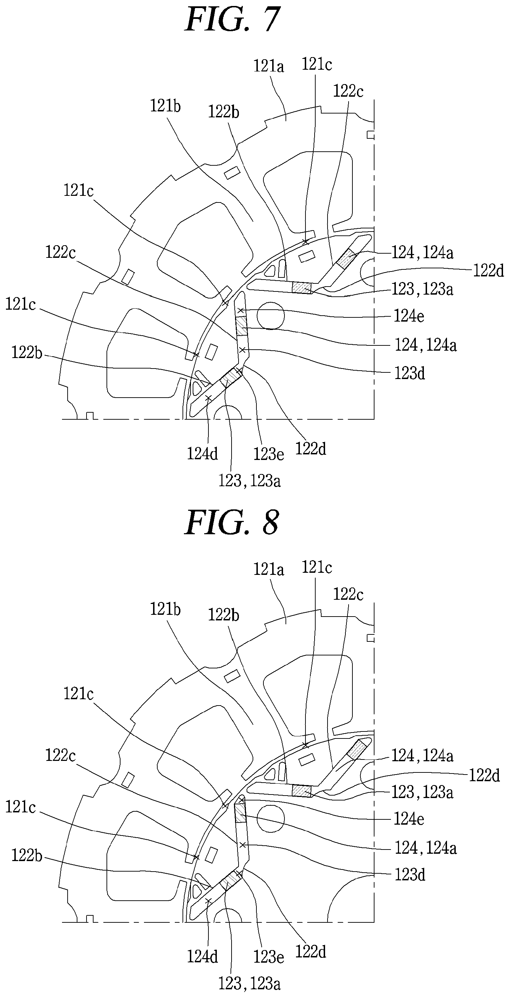

FIG. 7 is a plan view showing an arrangement of first and second permanent magnets in Case 2.

In FIG. 7, the first magnet receiving portion 122b and the second magnet receiving portion 122c are arranged to intersect each other on one side of the rotor core 122a. In addition, the first magnet receiving portion 122b and the second magnet receiving portion 122c can be arranged alternately on an outer side of the rotor core 122a as a pair, and a portion where the two pairs are arranged in succession is shown.

When viewed from a portion where the rotation shaft 125, which is the center of the rotor core 122a, is provided, the first magnet receiving portion 122b is arranged on the left, and the second magnet receiving portion 122c is arranged on the right. The first magnet receiving portion 122b and the second magnet receiving portion 122c are connected so as to intersect each other.

The rounded portion 123a, 124a is arranged on an upper right side of the first permanent magnet 123, 124 accommodated in the first magnet receiving portion 122b, and the rounded portion 123a, 124a is arranged at a middle position between upper right and left sides of the second permanent magnet 123, 124 accommodated in the second magnet receiving portion 122c.

As such, the first permanent magnet 123, 124 has the rounded portion 123a, 124a, at an upper end, on one side adjacent to the second permanent magnet 123, 124. The second permanent magnet 123, 124 has the rounded portion 123a, 124a, at an upper end, in a middle portion provided between one side adjacent to the first permanent magnet 123, 124 and the other side opposite thereto.

For example, referring to FIGS. 5 to 7, the first permanent magnet 123 can have a curvature of one side 123j of the rounded portion 123a adjacent to the second permanent magnet 124 that is smaller than that of the other side 123i opposite thereto, and the second permanent magnet 124 can have the same curvature on one side 124d of the rounded portion 124a adjacent to the first permanent magnet 123 and on the other side 123h opposite thereto.

Due to this, a magnetic pull force can be reduced while minimizing a reduction in motor efficiency.

In Case 3, the first permanent magnet 123, 124 has the rounded portion 123a, 124a, at an upper end, on one side adjacent to the second permanent magnet 123, 124. The second permanent magnet 123, 124 has the rounded portion 123a, 124a, at an upper end, on the other side provided opposite to one side thereof adjacent to the first permanent magnet 123, 124.

FIG. 8 is a plan view showing an arrangement of first and second permanent magnets in Case 3.

In FIG. 8, the first magnet receiving portion 122b and the second magnet receiving portion 122c are arranged to intersect each other on one side of the rotor core 122a. In addition, the first magnet receiving portion 122b and the second magnet receiving portion 122c can be arranged alternately on an outer side of the rotor core 122a as a pair, and only the rotor core 122a in a portion where the two pairs (the first magnet receiving portion 122b and the second magnet receiving portion 122c) are arranged in succession is shown cut away.

When viewed from a portion where the rotation shaft 125, which is the center of the rotor core 122a, is provided, the first magnet receiving portion 122b is arranged on the left, and the second magnet receiving portion 122c is arranged on the right. The first magnet receiving portion 122b and the second magnet receiving portion 122c are connected so as to intersect each other.

The rounded portion 123a, 124a is arranged on an upper right side of the first permanent magnet 123, 124 accommodated in the first magnet receiving portion 122b, and the rounded portion 123a, 124a is arranged on an upper right side of the second permanent magnet 123, 124 accommodated in the second magnet receiving portion 122c.

As such, in Case 3, the first permanent magnet 123, 124 has the rounded portion 123a, 124a, at an upper end, on one side adjacent to the second permanent magnet 123, 124. The second permanent magnet 123, 124 has the rounded portion 123a, 124a, at an upper end, on the other side provided opposite to one side thereof adjacent to the first permanent magnet 123, 124.

Referring to FIGS. 6 and 8, the first permanent magnet 123 can have a curvature of one side 123j of the rounded portion 123a adjacent to the second permanent magnet 124 that is smaller than that of the other side 123i opposite thereto, and the second permanent magnet 124 can have a curvature on one side 124i of the rounded portion 124a adjacent to the first permanent magnet 123 that is larger than that on the other side 124j opposite thereto.

Due to this, a magnetic pull force can be reduced while minimizing a reduction in motor efficiency.

FIG. 15 is a graph showing a magnetic pull force (MPF) and motor efficiency for each case.

Referring to FIG. 15, a degree to which the magnetic pull force (MPF) is reduced and the motor efficiency is reduced can be seen for each case.

In Cases 1 to 3, the magnetic pull force (MPF) was reduced by 27%, and the motor efficiency was reduced by approximately 17 to 18%.

As described below, in an arrangement of the permanent magnets 123, 124 in Cases 1 to 3, a magnetic pull force (MPF) can be reduced as much as possible while minimizing a reduction in motor efficiency compared to that of the permanent magnets 123, 124 in Cases 4 to 9.

In Case 4, the first permanent magnet 123, 124 has the rounded portion 123a, 124a, at an upper end, in a portion provided between one side adjacent to the second permanent magnet 123, 124 and the other side opposite thereto.

The second permanent magnet 123, 124 has the rounded portion 123a, 124a, at an upper end, on one side adjacent to the first permanent magnet 123, 124.

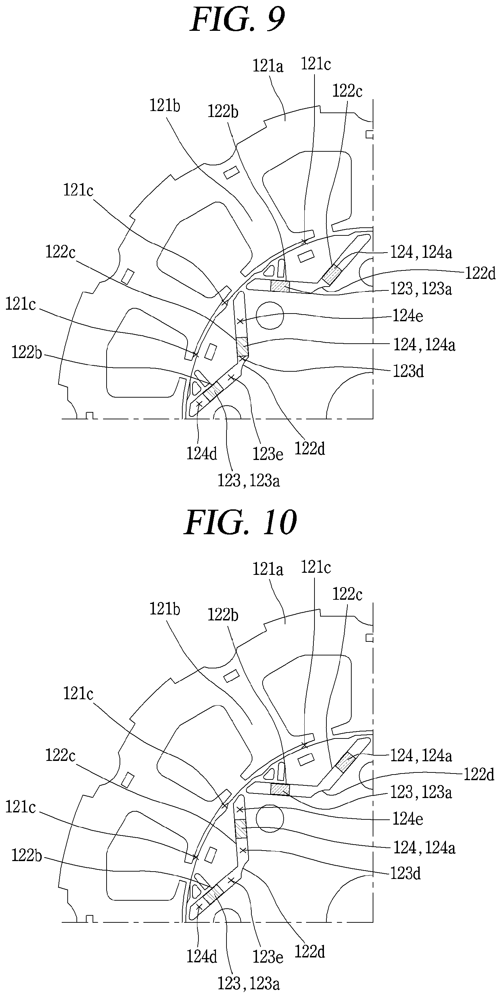

FIG. 9 is a plan view showing an arrangement of first and second permanent magnets in Case 4.

In FIG. 9, the first magnet receiving portion 122b and the second magnet receiving portion 122c are arranged to intersect each other on one side of the rotor core 122a. In addition, the first magnet receiving portion 122b and the second magnet receiving portion 122c can be arranged alternately on an outer side of the rotor core 122a as a pair, and a portion where the two pairs are arranged in succession is shown.

When viewed from a portion where the rotation shaft 125, which is the center of the rotor core 122a, is provided, the first magnet receiving portion 122b is arranged on the left, and the second magnet receiving portion 122c is arranged on the right. The first magnet receiving portion 122b and the second magnet receiving portion 122c are connected so as to intersect each other.

The rounded portion 123a, 124a is arranged at a middle position between upper right and left sides of the first permanent magnet 123, 124 accommodated in the first magnet receiving portion 122b, and the rounded portion 123a, 124a is arranged on an upper left side of the second permanent magnet 123, 124 accommodated in the second magnet receiving portion 122c.

As such, in Case 4, the first permanent magnet 123, 124 has the rounded portion 123a, 124a, at an upper end, in a portion provided between one side adjacent to the second permanent magnet 123, 124 and the other side opposite thereto, and the second permanent magnet 123, 124 has the rounded portion 123a, 124a, at an upper end, on one side adjacent to the first permanent magnet 123, 124.

Referring to FIGS. 4, 5 and 9, the first permanent magnet 123 can have the same curvature on one side 123h of the rounded portion 123a adjacent to the second permanent magnet 124 and on the other side 123g opposite thereto, and the second permanent magnet 124 can have a curvature of the rounded portion 124a on one side 124b adjacent to the first permanent magnet 123 that is smaller than that of the other side 124c opposite thereto.

Due to this, it can be possible to reduce cogging torque while minimizing a decrease in motor efficiency.

In Case 5, the first permanent magnet 123, 124 has the rounded portion 123a, 124a, at an upper end, in a portion provided between one side adjacent to the second permanent magnet 123, 124 and the other side opposite thereto. The second permanent magnet 123, 124 has the rounded portion 123a, 124a, at an upper end, in a portion provided between one side adjacent to the first permanent magnet 123, 124 and the other side opposite thereto.

FIG. 10 is a plan view showing an arrangement of first and second permanent magnets in Case 5.

In FIG. 10, the first magnet receiving portion 122b and the second magnet receiving portion 122c are arranged to intersect each other on one side of the rotor core 122a. In addition, the first magnet receiving portion 122b and the second magnet receiving portion 122c can be arranged alternately on an outer side of the rotor core 122a as a pair, and a portion where the two pairs are arranged in succession is shown.

When viewed from a portion where the rotation shaft 125, which is the center of the rotor core 122a, is provided, the first magnet receiving portion 122b is arranged on the left, and the second magnet receiving portion 122c is arranged on the right. The first magnet receiving portion 122b and the second magnet receiving portion 122c are connected so as to intersect each other.

The rounded portion 123a, 124a is arranged at a middle position between upper right and left sides of the first permanent magnet 123, 124 accommodated in the first magnet receiving portion 122b, and the rounded portion 123a, 124a is arranged at a middle position between upper right and left sides of the second permanent magnet 123, 124 accommodated in the second magnet receiving portion 122c.

As such, in Case 5, the first permanent magnet 123, 124 has the rounded portion 123a, 124a, at an upper end, in a portion provided between one side adjacent to the second permanent magnet 123, 124 and the other side opposite thereto. The second permanent magnet 123, 124 has the rounded portion 123a, 124a, at an upper end, in a portion provided between one side adjacent to the first permanent magnet 123, 124 and the other side opposite thereto.

Due to this, it can be possible to reduce cogging torque while minimizing a decrease in motor efficiency.

In Case 6, the first permanent magnet 123, 124 has the rounded portion 123a, 124a, at an upper end, in a portion provided between one side adjacent to the second permanent magnet 123, 124 and the other side opposite thereto.

The second permanent magnet 123, 124 has the rounded portion 123a, 124a, at an upper end, on the other side provided opposite to one side thereof adjacent to the first permanent magnet 123, 124.

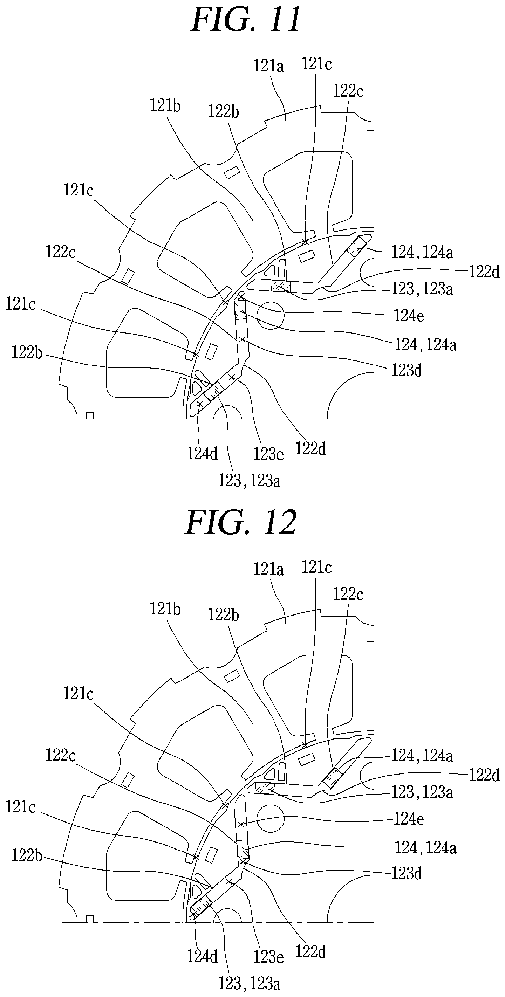

FIG. 11 is a plan view showing an arrangement of first and second permanent magnets in Case 6.

In FIG. 11, the first magnet receiving portion 122b and the second magnet receiving portion 122c are arranged to intersect each other on one side of the rotor core 122a. In addition, the first magnet receiving portion 122b and the second magnet receiving portion 122c can be arranged alternately on an outer side of the rotor core 122a as a pair, and a portion where the two pairs are arranged in succession is shown.

When viewed from a portion where the rotation shaft 125, which is the center of the rotor core 122a, is provided, the first magnet receiving portion 122b is arranged on the left, and the second magnet receiving portion 122c is arranged on the right. The first magnet receiving portion 122b and the second magnet receiving portion 122c are connected so as to intersect each other.

The rounded portion 123a, 124a is arranged at a middle position between upper right and left sides of the first permanent magnet 123, 124 accommodated in the first magnet receiving portion 122b, and the rounded portion 123a, 124a is arranged at an upper right side position of the second permanent magnet 123, 124 accommodated in the second magnet receiving portion 122c.

As such, in Case 6, the first permanent magnet 123, 124 has the rounded portion 123a, 124a, at an upper end, in a portion provided between one side adjacent to the second permanent magnet 123, 124 and the other side opposite thereto.

The second permanent magnet 123, 124 has the rounded portion 123a, 124a, at an upper end, on the other side provided opposite to one side thereof adjacent to the first permanent magnet 123, 124.

Due to this, it can be possible to reduce cogging torque while minimizing a decrease in motor efficiency.

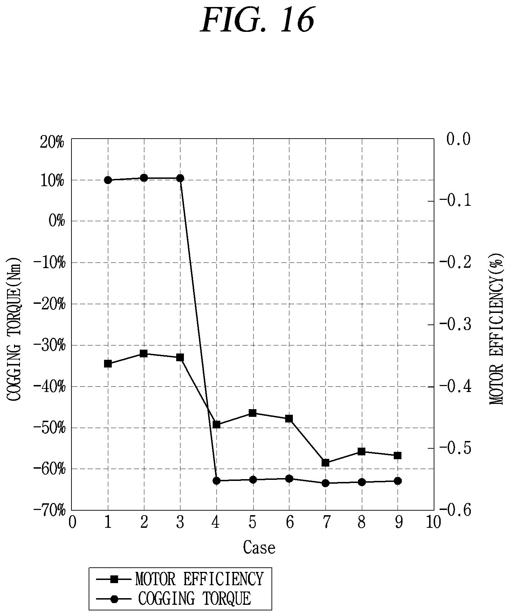

FIG. 16 is a graph showing cogging torque and motor efficiency for each case.

Referring to FIG. 16, a degree to which the cogging torque is reduced and the motor efficiency is reduced can be seen for each case.

In Cases 4 to 6, the cogging torque was reduced by approximately 60%, and the motor efficiency was reduced by approximately 0.5%.

An arrangement of the permanent magnets 123, 124 in Cases 4 to 6 is advantageous in terms of reducing cogging torque compared to that of the permanent magnets 123, 124 in Cases 1 to 3 (there is a difference in reducing cogging torque of approximately 70%).

The arrangement of the permanent magnets 123, 124 in Cases 4 to 6 is advantageous in terms of decreasing a reduction in motor efficiency compared to that of the permanent magnets 123, 124 in Cases 7 to 9 (there is a difference in that a reduction in motor efficiency is decreased by approximately 0.05%).

The arrangement of the permanent magnets 123, 124 in Cases 4 to 6 is advantageous in terms of reducing cogging torque and minimizing a reduction in motor efficiency compared to that of the permanent magnets 123, 124 in other cases.

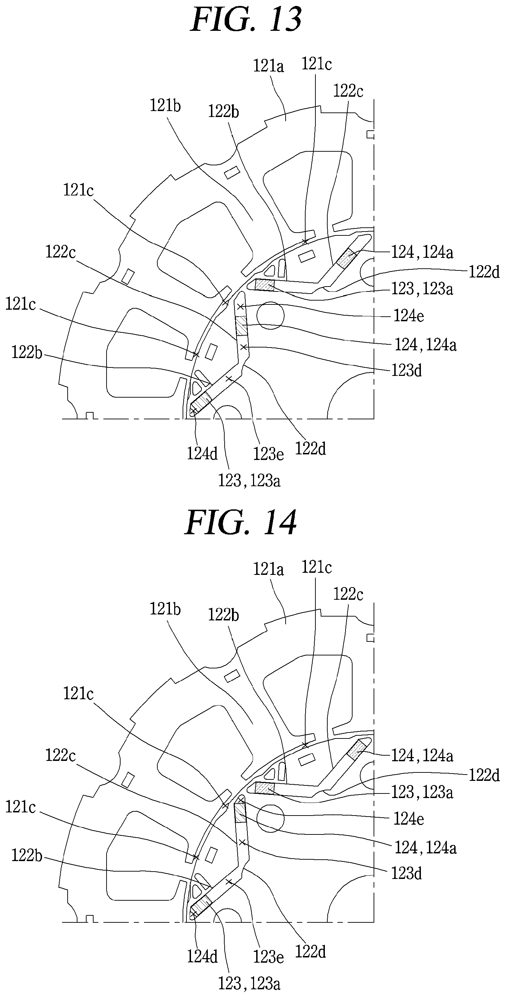

FIG. 12 is a plan view showing an arrangement of first and second permanent magnets in Case 7, and FIG. 13 is a plan view showing an arrangement of first and second permanent magnets in Case 8. In addition, FIG. 14 is a plan view showing an arrangement of first and second permanent magnets in Case 9.

Referring to FIGS. 12 to 14, Cases 7 to 9 of the present disclosure will be described.

Even in Cases 7 to 9, when viewed from a portion where the rotation shaft 125, which is the center of the rotor core 122a, is provided, the first magnet receiving portion 122b is arranged on the left, and the second magnet receiving portion 122c is arranged on the right. The first magnet receiving portion 122b and the second magnet receiving portion 122c are connected so as to intersect each other.

In Case 7, the rounded portion 123a, 124a is arranged on an upper left side of the first permanent magnet 123, 124 accommodated in the first magnet receiving portion 122b, and the rounded portion 123a, 124a is arranged at an upper left position of the second permanent magnet 123, 124 accommodated in the second magnet receiving portion 122c.

In Case 8, the rounded portion 123a, 124a is arranged on an upper left side of the first permanent magnet 123, 124 accommodated in the first magnet receiving portion 122b, and the rounded portion 123a, 124a is arranged at a middle portion position between upper left and right sides of the second permanent magnet 123, 124 accommodated in the second magnet receiving portion 122c.

In Case 9, the rounded portion 123a, 124a is arranged on an upper left side of the first permanent magnet 123, 124 accommodated in the first magnet receiving portion 122b, and the rounded portion 123a, 124a is arranged at an upper right position of the second permanent magnet 123, 124 accommodated in the second magnet receiving portion 122c.

The magnet insertion motor and the rotary compressor having the same described above will not be limited to the configurations and methods of the foregoing embodiments, and all or part of each embodiment can also be selectively combined and configured to make various modifications thereto.

It is obvious to those skilled in the art that the present disclosure can be embodied in other specific forms without departing from the concept and essential characteristics thereof. Therefore, the detailed description of the present disclosure should not be limitedly construed in all of the aspects, and should be understood to be illustrative. The scope of the present disclosure should be determined by reasonable interpretation of the appended claims, and all changes that come within the equivalent scope of the present disclosure are included in the scope of the present disclosure.

### Industrial Applicability

The present disclosure can be used in a magnet insertion motor that reduces noise and vibration and a rotary compressor having the same.

## Claims

1. A magnet insertion motor comprising:
a stator core;
a rotor core provided on an inner side of the stator core, and provided to be rotatable;
a permanent magnet accommodated inside the rotor core; and
a rotation shaft provided on an inner side of the rotor core to rotate together with the rotor core,
wherein the rotation shaft comprises an upper side portion coupled to the rotor core and a lower side portion coupled to a load that receives a rotational force of the rotor core,
wherein a plurality of magnet receiving portions spaced apart along a circumferential direction are provided inside the rotor core,
wherein the permanent magnet is inserted into the magnet receiving portion,
wherein the permanent magnet comprises an upper end facing an end portion of the upper side portion of the rotation shaft based on a surface where the polarity acts, a lower end opposite to the upper end to face an end portion of the lower side portion of the rotation shaft, and two side surface ends connecting the upper end and the lower end, and
wherein the upper end comprises a rounded portion arranged to be rounded, and the lower end and the two side surface ends are arranged in a straight line.

2. The magnet insertion motor of claim 1, wherein each of the plurality of magnet receiving portions is configured with a pair of magnet receiving portions inserted in a V-shape so as to be spaced apart from each other as going outward in a radial direction,
wherein the pair of magnet receiving portions comprises a first magnet receiving portion and a second magnet receiving portion, and
wherein the permanent magnet comprises a first permanent magnet inserted into the first magnet receiving portion and a second permanent magnet inserted into the second magnet receiving portion.

3. The magnet insertion motor of claim 1, wherein the lower side portion of the rotation shaft comprises a crankshaft that rotates eccentrically.

4. The magnet insertion motor of claim 2, wherein the first and second permanent magnets have rounded portions, at respective upper ends, on respective one sides thereof adjacent to each other.

5. The magnet insertion motor of claim 2, wherein the first permanent magnet has a rounded portion, at an upper end, on one side thereof adjacent to the second permanent magnet, and
wherein the second permanent magnet has a rounded portion, at an upper end, in a portion provided between one side adjacent to the first permanent magnet and the other side opposite thereto.

6. The magnet insertion motor of claim 2, wherein the first permanent magnet has a rounded portion, at an upper end, on one side thereof adjacent to the second permanent magnet, and
wherein the second permanent magnet has a rounded portion, at an upper end, on the other side provided opposite to one side thereof adjacent to the first permanent magnet.

7. The magnet insertion motor of claim 2, wherein the first permanent magnet has a rounded portion, at an upper end, in a portion provided between one side thereof adjacent to the second permanent magnet and the other side opposite thereto, and
wherein the second permanent magnet has a rounded portion, at an upper end, on one side thereof adjacent to the first permanent magnet.

8. The magnet insertion motor of claim 2, wherein the first permanent magnet has a rounded portion, at an upper end, in a portion provided between one side thereof adjacent to the second permanent magnet and the other side opposite thereto, and
wherein the second permanent magnet has a rounded portion, at an upper end, in a portion provided between one side adjacent to the first permanent magnet and the other side opposite thereto.

9. The magnet insertion motor of claim 2, wherein the first permanent magnet has a rounded portion, at an upper end, in a portion provided between one side thereof adjacent to the second permanent magnet and the other side opposite thereto, and
wherein the second permanent magnet has a rounded portion, at an upper end, on the other side provided opposite to one side thereof adjacent to the first permanent magnet.

10. The magnet insertion motor of claim 2, wherein the first and second magnet receiving portions are alternately provided in a circumferential direction on an outer side of the rotor core.

11. The magnet insertion motor of claim 2, wherein the rounded portions of the first and second permanent magnets include curved portions on one side and the other side, respectively.

12. The magnet insertion motor of claim 2, wherein corner removal areas are provided between both sides of the rounded portion, the first and second magnet receiving portions, and side walls of the first and second magnet receiving portions.

13. The magnet insertion motor of claim 12, wherein the stator core has teeth that extend radially to arrange an air gap with an outer circumference of the rotor core, and
wherein the corner removal areas overlap the teeth in a circumferential direction.

14. The magnet insertion motor of claim 12, wherein a protruding bridge arranged to protrude from a surface between the first magnet receiving portion and the second magnet receiving portion is provided to define one side of the corner removal area between the first magnet receiving portion and the second magnet receiving portion.

15. The magnet insertion motor of claim 14, wherein the protruding bridge has a predetermined width and extends in an axial direction to support side surfaces of the first and second permanent magnets.

16. The magnet insertion motor of claim 4, wherein the first and second permanent magnets have a curvature on one sides of the rounded portions adjacent to each other that is smaller than that on the other sides of the rounded portions opposite thereto.

17. The magnet insertion motor of claim 5, wherein the first permanent magnet has a curvature on one side of the rounded portion adjacent to the second permanent magnet that is smaller than that on the other side opposite thereto, and
wherein the second permanent magnet has the same curvature on one side of the rounded portion adjacent to the first permanent magnet and on the other side opposite thereto.

18. The magnet insertion motor of claim 6, wherein the first permanent magnet has a curvature on one side of the rounded portion adjacent to the second permanent magnet that is smaller than that on the other side opposite thereto, and
wherein the second permanent magnet has a curvature on one side of the rounded portion adjacent to the first permanent magnet that is larger than that on the other side opposite thereto.

19. The magnet insertion motor of claim 7, wherein the first permanent magnet has the same curvature on one side of the rounded portion adjacent to the second permanent magnet and on the other side opposite thereto, and
wherein the second permanent magnet has a curvature on one side of the rounded portion adjacent to the first permanent magnet that is smaller that on the other side opposite thereto.

20. A rotary compressor comprising:
a casing constituting an exterior thereof;
a cylinder provided inside the casing to have a compression space on an inner circumferential surface thereof, and a suction port communicating with the compression space to allow the suction of refrigerant;
a roller that is rotatably provided in the compression space of the cylinder; and
a magnet insertion motor of any one of claims 1 to 19.
